# EUROPÄISCHE PATENTSCHRIFT

(11) **EP 2 797 938 B1**
(45) Veröffentlichungstag und Bekanntmachung des Hinweises auf die Patenterteilung: **01.06.2016**
(21) Anmeldenummer: 12810314.0
(22) Anmeldetag: 28.12.2012
(51) Int. Cl.: C07F 9/6574

(54) **VERFAHREN ZUR HERSTELLUNG VON 6-CHLORODIBENZO [D,F][1,3,2]DIOXAPHOSPHEPIN**
METHOD FOR PRODUCING 6-CHLORODIBENZO [D,F][1,3,2]DIOXAPHOSPHEPIN
PROCÉDÉ DE PRODUCTION DE 6-CHLORODIBENZO[D,F][1,3,2]-DIOXAPHOSPHÉPINE

(30) Priorität: 30.12.2011 EP 11196186
(43) Veröffentlichungstag der Anmeldung: 05.11.2014
(73) Patentinhaber: BASF SE, 67056 Ludwigshafen am Rhein (DE); Berens, Ulrich, 79589 Binzen (DE); Ganz, Holger, 67067 Ludwigshafen (DE); Windlin, Franz Niklaus, 69120 Heidelberg (DE); Tishkov, Alexander, Moskau 11729 (RU)
(72) Erfinder: BERENS, Ulrich, 79589 Binzen (DE); GANZ, Holger, 67067 Ludwigshafen (DE); WINDLIN, Franz Niklaus, 69120 Heidelberg (DE); TISHKOV, Alexander, Moskau 125299 (RU)
(74) Vertreter: BASF IP Association
(86) Internationale Anmeldenummer: PCT/EP2012/077022
(87) Internationale Veröffentlichungsnummer: WO 2013/098371

(56) Entgegenhaltungen:
- TSAREV, V. N. ET AL: "Complexing and catalytic properties of easily available chiral imino phosphite based on biphenyl-2,2'-diol", RUSSIAN CHEMICAL BULLETIN (TRANSLATION OF IZVESTIYA AKADEMII NAUK, SERIYA KHIMICHESKAYA) , 53(4), 814-818 CODEN: RCBUEY; ISSN: 1066-5285, 2004, XP002691293,
- ANSCHUTZ, L. ET AL: "Catalytic influence of phosphorus trichloride on the conversion of bivalent phenols", NATURWISSENSCHAFTEN , 42, 644 CODEN: NATWAY; ISSN: 0028-1042, 1955, XP002691294,
- John McMurry: "Organic Chemistry - Third Edition", 1992, Brooks/Cole Publishing Company
- BASF GLOBAL: 'N-Methylpyrrolidone (NMP)', [Online] 01 Januar 2007, XP055091940 Gefunden im Internet: <URL:http://www2.basf.us/diols/bcdiolsnmp.h tml> [gefunden am 2013-12-06]
- MCELVAIN: 'XRN = 3681122' JOURNAL OF THE AMERICAN CHEMICAL SOCIETY Bd. 71, 01 Januar 1949, Seiten 896 - 898, XP055091944
- Reppe Et Al.: "XRN = 3681122", Justus Liebigs Annalen der Chemie, vol. 596, 1 January 1955 (1955-01-01), page 1, 202, XP055091941,
- GITTOS: 'XRN = 3681122' JOURNAL OF THE CHEMICAL SOCIETY 01 Januar 1955, Seite 2371,2375, XP055091942
- BALANDINA: 'XRN = 3681122' RUSSIAN CHEMICAL BULLETIN Bd. 45, Nr. 3, 01 Januar 1996, Seiten 683 - 386, XP055091943

## Beschreibung

### HINTERGRUND DER ERFINDUNG

Die vorliegende Erfindung betrifft ein Verfahren zur Herstellung von 6-Chloro-dibenzo[d,f][1,3,2]dioxaphosphepin (2,2'-Biphenylphosphormonochloridit).

### STAND DER TECHNIK

Organische Diphosphitverbindungen haben äußerst weite Verbreitung gefunden, beispielsweise als Chelatliganden in der homogenen Katalyse, aber auch als Flammschutzmittel, UV-Stabilisatoren, etc. Bestimmte Rhodiumkomplexe mit Chelatdiphosphitverbindungen haben sich als Katalysatoren für die Hydroformylierung von Olefinen bewährt, da sie einerseits eine hohe katalytische Aktivität aufweisen und andererseits überwiegend zu linearen Aldehyden führen, die für viele Anwendungen bevorzugt sind. Organische Diphosphitverbindungen eignen sich weiterhin als Liganden für Über-gangsmetallkomplexkatalysatoren zur Hydrocyanierung, Hydrierung, Carbonylierung, Hydroacylierung, Hydroamidierung, Hydroveresterung, Hydrosilylierung, Hydroborierung, Alkoholyse, Isomerisierung, allylische Alkylierung oder Hydroalkylierung.

Derartige Diphosphitverbindungen, ihre Herstellung und ihr Einsatz als Liganden in einem Hydroformylierungsverfahren sind z. B. in der EP 0 214 622 A2, EP 0 285 136 A2, US 4,668,651, US 4,748,261, US 4,769,498, US 4,885,401, US 5,235,113, US 5,391,801, US 5,663,403, US 5,728,861, US 6,172,267 und DE 103 60 771 A1 beschrieben.

Die Herstellung von organischen Diphosphiten der allgemeinen Formel (4) erfolgt üblicherweise durch ein Verfahren, das die folgenden Schritte umfasst:
a) Umsetzen einer Verbindung der Formel (1) (= erstes aromatisches Diol) mit Phosphortrichlorid unter Erhalt des Phosphorchloridits (2) 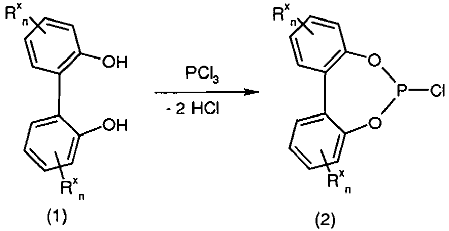
b) Umsetzen des Phosphorchloridits (2) mit einer Verbindung der Formel (3) (= zweites aromatisches Diol) unter Erhalt des Chelatdiphosphits (4)

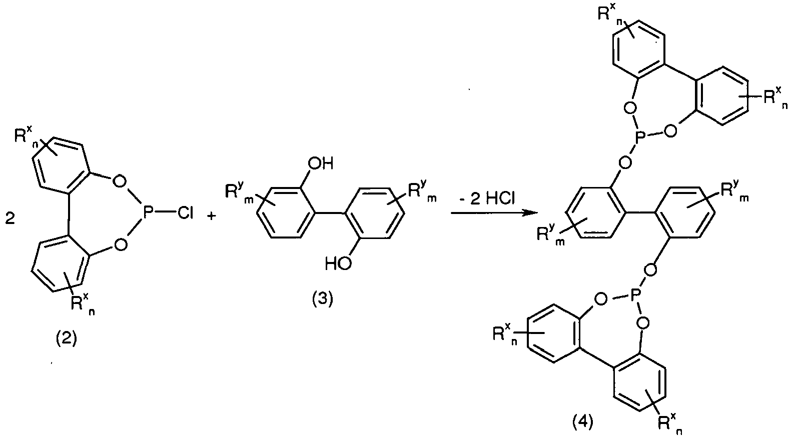

Die von dem ersten aromatischen Diol (1) abgeleiteten Gruppen der organischen Diphosphite werden im Folgenden auch als "Seitenflügel" bezeichnet.

Phosphorchloridite der Formel (2) und speziell 6-Chlorodibenzo[d,f][1,3,2]dioxaphosphepin sind somit wichtige Zwischenprodukte bei der Herstellung von Liganden für eine Vielzahl homogener Übergangsmetallkatalysatoren. Es besteht somit ein stetiger Bedarf an Verfahren, die eine Herstellung dieser Verbindungen unter möglichst effektiver Nutzung der Edukte in möglichst hohen Ausbeuten und in guter Reinheit ermöglichen. Aufgrund der Toxizität und der Korrosivität von PCl₃ besteht ein Bedarf an Verfahren, die einen möglichst geringen Überschuss des in der Synthese eingesetzten PCl₃ ermöglichen, um die zu handhabenden Stoffströme bei Synthese, Recycling und Entsorgung möglichst gering zu halten.

Bei der Herstellung von Phosphormonochloriditen und Chelatdiphosphiten fällt bei der Kondensationsreaktion der eingesetzten Alkohole oder Phenole mit PCl₃ Halogenwasserstoff an, der aus dem Reaktionsgemisch entfernt werden muss. Eine Möglichkeit ist die Neutralisation mit einer Base, wobei vielfach Stickstoffbasen zum Einsatz kommen. Bei dieser Vorgehensweise muss eine zumindest stöchiometrische Menge Base bezogen auf den freigesetzten Halogenwasserstoff eingesetzt werden. Häufig wird die Base auch im Überschuss eingesetzt. Eine katalytische Aktivität der halogenwasserstoffsauren Salze der Stickstoffbasen bei den Kondensationsreaktionen wurde bisher nicht beschrieben.

Die WO 2003/062171 und die WO 2003/062251 beschreiben ein Verfahren zur Abtrennung von Säuren aus Reaktionsgemischen mittels einer Hilfsbase, die ein Salz mit der Säure bildet, das bei Temperaturen flüssig ist, bei denen das Wertprodukt während der Abtrennung des Flüssigsalzes nicht signifikant zersetzt wird und das Salz der Hilfsbase mit dem Wertprodukt oder der Lösung des Wertproduktes in einem geeigneten Lösungsmittel zwei nicht mischbare flüssige Phasen ausbildet. Mit anderen Worten verhalten sich die Säuresalze der Hilfsbase wie ionische Flüssigkeiten, die mit dem eigentlichen Reaktionslösungsmittel im Wesentlichen nicht mischbar sind. Bevorzugte Hilfsbasen dieses Typs sind 1-Methylimidazol, 1-n-Butylimidazol, 2-Methylpyridin und 2-Ethylpyridin. Die in der WO 2003/062171 und WO 2003/062251 beschriebenen Verfahren eignen sich unter Anderem für Phosphorylierungsreaktionen, wie die zuvor beschriebene Synthese von Phosphormonochloriditen sowie deren Umsetzung mit einem aromatischen Diol unter Erhalt einer Chelatdiphosphitverbindung. Nach der Lehre der WO 2003/062171 und WO 2003/062251 wird die Stickstoffbase in zumindest stöchiometrischer Menge bezogen auf freiwerdenden Halogenwasserstoff eingesetzt.

Die CN 101684130A beschreibt ein Verfahren zur Herstellung von Chelatphosphiten, bei dem man das die Seitenflügel bildende Phosphormonochloridit als Lösung in Dichlormethan und das die beiden Phosphoratome verbrückende aromatische Diol als Lösung in Triethylamin oder einem Triethylamin//Dichlormethan-Gemisch zur Reaktion einsetzt. Zur Herstellung des Phosphorchloridits wird gelehrt, das aromatische Diol mit 1 bis 10 Äquivalenten PCl₃ umzusetzen und überschüssiges PCl₃ abzudestillieren. Der Einsatz eines Säuresalzes einer Stickstoffbase als Katalysator ist nicht beschrieben. In den konkreten Ausführungsbeispielen wird 2,2'-Biphenol in Abwesenheit organischer Lösungsmittel bei 100 °C mit PCl₃ umgesetzt. Die Umsetzung erfolgt somit unterhalb des Schmelzpunktes von 2,2'-Biphenol, d. h. als Suspension des Diols in einem großen Überschuss von PCl₃ (Molverhältnis Diol : PCl₃ = 1 : 6,1). Zudem wird in diesem Dokument angegeben, dass bei einem Einsatz des so erhaltenen nicht gereinigten Phosphorchloridits in einem anderen Lösungsmittel als Dichlormethan, wie z. B. Toluol, aufgrund der enthaltenen Verunreinigungen nur trübe Suspensionen erhalten werden. Dies konnten die Erfinder der vorliegenden Erfindung für das nachfolgend beschriebene erfindungsgemäße Verfahren jedoch widerlegen.

Die WO 2010/052090 und WO 2010/052091 beschreiben Verfahren zur Herstellung von 6-Chlorodibenzo[d,f][1,3,2]-dioxaphosphepin, wobei 2,2'-Dihydroxybiphenyl als Schmelze oder als Suspension in einem inerten Lösungsmittel zu einem Überschuss an Phosphortrichlorid unter Inertgas und Rühren gegeben und die entstehenden Gase aus dem Reaktionsgemisch abgeleitet und neutralisiert werden. Nachteilig an diesen Verfahren ist, dass das PCl₃ in einem hohen molaren Überschuss gegenüber dem Diol eingesetzt werden muss. So wird nach der allgemeinen Lehre dieser Dokumente ein 2-bis 25-facher Überschuss eingesetzt, in den Ausführungsbeispielen wird ein etwa 12-facher Überschuss verwendet. Diese Dokumente lehren nicht, die Umsetzung in Gegenwart eines Katalysators durchzuführen.

Die WO 2008/124468 beschreibt eine Calixarenbisphosphit-Zusammensetzung zur Verwendung als Ligand in einem Übergangsmetallkomplex-Katalysator. In Beispiel 1 (a) wird die Herstellung von 2,2'-Biphenylphosphormonochloridit beschrieben. Danach werden bei Raumtemperatur 3,7 Äquivalente PCl₃ zu einem Äquivalent o,o'-Biphenyl-diol gegeben und die erhaltene Suspension anschließend bis zum Abklingen der HCl-Entwicklung erhitzt und nachfolgend im Hochvakuum destilliert, wobei das gewünschte Phosphorchloridit in 78 % Ausbeute erhalten wird. Ein wesentlicher Nachteil dieser Vorgehensweise ist, dass die Reaktion nach Mischen der Reaktanden praktisch nicht mehr kontrollierbar und somit aus sicherheitstechnischen Aspekten problematisch ist. Dabei stellt weniger die thermische Sicherheit ein Problem dar, da diese Reaktion endotherm ist, sondern die Gefahr, dass im Produktionsmaßstab das HCl-abführende System, beispielsweise durch zu hohe Reaktionsgeschwindigkeit oder Verstopfung, ausfallen kann, was zu einem Druckaufbau mit den entsprechenden Folgen führen kann. Darüber hinaus wird ein höheres Investment erforderlich, da der HCl-Wäscher größer ausgelegt werden muss, um plötzlich auftretende größere HCl-Mengen pro Zeiteinheit abzufangen.

Die WO 2010/042313 beschreibt unter Anderem ein Verfahren zur Herstellung von Phosphormonochloriditen, durch Umsetzung von PCl₃ mit einem aromatischen Diol in einer Aufschlämmung, die zusätzlich ein organisches Lösungsmittel und weniger als 5 Mol%, bezogen auf das aromatische Diol, einer Stickstoffbase enthält. Konkret Wird in Beispiel 1 dieses Dokuments 2,2'-Dihydroxybiphenyl als Suspension in Toluol und in Gegenwart einer katalytischen Menge Pyridin bei 0 °C mit PCl₃ umgesetzt. Es ist ein kritisches Merkmal dieses Verfahrens, dass ein wesentlicher Teil des eingesetzten aromatischen Diols in dem organischen Lösungsmittel unlöslich ist. So steht zur eigentlichen Reaktion in der organischen Phase ein hoher molarer Überschuss an PCl₃ gegenüber dem Diol zur Verfügung, obwohl der molare Überschuss an PCl₃ insgesamt geringer ist. In diesem Dokument wird jedoch auch ausgeführt, dass bei einem zu geringem Überschuss an PCl₃ unerwünschte Nebenprodukte entstehen.

In dem Artikel Complexing and catalytic properties of easily available chrial iminophosphite based on biphenyl-2,2-diol" (Russian Chemical Bulletin, Int. Ed., 2004, 53, 814-818) wird ein Verfahren zur Herstellung von 2,2'-Biphenylphosphormonochloridit beschrieben. Hierbei wird Biphenyl-2,2-diol als Suspension in Phosphortrichlorid unter Zugabe einer katalytischen Menge an N-Methylpyrrolidon (kleiner 1 mol% bezogen auf die Menge an eingesetztem Biphenyl-2,2-diol) unter Rückflussbedingungen zu 2,2'-Biphenylphosphormonochloridit umgesetzt.

Unter http://www2.basf.us/diols/bcdiolsnmp.html (Stand 2015-08-05) wird N-Methylpyrrolidon als sehr schwache Base und als chemisch stabiles und äußerst gutes polares Lösungsmittel beschrieben. N-Methylpyrrolidon wird daher in einer Vielzahl chemischer Reaktion als inertes Lösungsmittel eingesetzt.

Die WO 2009/120210 und die zeitranggleiche US 2009/0247790 haben einen der WO 2010/042313 vergleichbaren Offenbarungsgehalt. Beschrieben ist ein Verfahren zur Herstellung von Phosphormonochloriditen, wobei die Umsetzung von PCl₃ mit einem aromatischen Diol in einer Lösung erfolgt, die weniger als 5 Mol% einer Stickstoffbase, bezogen auf Mole aromatisches Diol enthält, wobei gebildetes HCl aus der Reaktionslösung ausgetrieben wird und die Umsetzung unter im Wesentlichen isothermen Bedingungen erfolgt. Zur Umsetzung wird PCl₃ in einer Reaktionszone vorgelegt und eine Lösung oder Suspension des Diols in einem organischen Lösungsmittel in die Reaktionszone eingespeist.

In einem Artikel von Anschütz et al. (Naturwissenschaften, 1955, 42, 644) wird der Effekt von Wasser auf die Umsetzung von zweiwertigen Phenolen mit Phosphortrichlorid beschrieben.

Der vorliegenden Erfindung liegt die Aufgabe zugrunde, ein einfaches, effektives und sicheres Verfahren zur Herstellung von Phosphorchloriditen zur Verfügung zu stellen. Es soll die Herstellung der Phosphorchloridite unter möglichst effektiver Nutzung der Edukte in möglichst hohen Ausbeuten und in guter Reinheit ermöglichen. Dabei soll die erhaltene Phosphorchloriditverbindung möglichst eine Reinheit aufweisen, die einen Einsatz als Zwischenprodukt zur Herstellung von Chelatphosphiten ohne aufwendige Zwischenreinigung ermöglicht.

Überraschenderweise wurde nun gefunden, dass diese Aufgabe durch ein Verfahren zur Herstellung von Phosphorchloriditen gelöst wird, bei dem ein aromatisches Diol mit PCl₃ in Gegenwart einer katalytischen Menge eines Säuresalzes einer Stickstoffbase und in Abwesenheit externer organischer Lösungsmittel umgesetzt wird. Es ist weiterhin überraschend, dass nur sehr geringe Überschüsse an PCl₃ erforderlich sind, wenn man das PCl₃ zu einer Schmelze von 2,2'-Dihydroxybiphenyl gibt, d. h. unter Verfahrensbedingungen, bei denen das 2,2'-Dihydroxybiphenyl bis kurz vor Ende der Umsetzung immer einen höheren Überschuss gegenüber PCl₃ hat. Des Weiteren ist es überraschend, dass bei einer Zugabe des PCl₃ in den Gasraum oberhalb der Flüssigkeitsoberfläche der Schmelze des 2,2'-Dihydroxybiphenyls trotz des deutlich niedrigeren Siedepunkts des PCl₃ im Vergleich zur Schmelztemperatur des 2,2'-Dihydroxybiphenyls, praktisch kein PCl₃-Verlust durch Verdampfen und Mitreißen im Abgasstrom eintritt.

### ZUSAMMENFASSUNG DER ERFINDUNG

Gegenstand der Erfindung ist ein Verfahren zur Herstellung von 6-Chlorodibenzo[d,f][1,3,2]dioxaphosphepin (I) 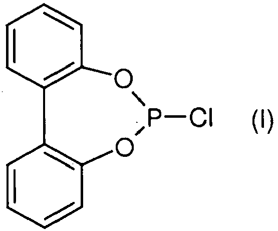 bei dem man 2,2'-Dihydroxybiphenyl (A1) 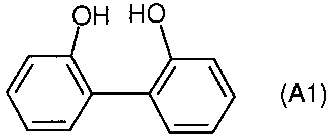 mit PCl₃ in Gegenwart einer katalytischen Menge eines Säuresalzes einer Stickstoffbase umsetzt, wobei sich das Säuresalze von einer Stickstoffbase ableitet, die ausgewählt ist unter jeweils unsubstituierten oder substituierten Imidazolen, Pyridinen, 1H-Pyrazolen, 4H-Pyrazolen, 1-Pyrazolinen, 3-Pyrazolinen, Imidazolinen, Thiazolen, Oxazolen, 1,2,4-Triazolen und 1,2,3-Triazolen, und wobei die Umsetzung in Abwesenheit externer organischer Lösungsmittel erfolgt.

### BESCHREIBUNG DER ERFINDUNG

Der Begriff "externes organisches Lösungsmittel" bezeichnet im Rahmen der Erfindung als Lösungsmittel wirksame Komponenten, die von den zur Herstellung der Phosphorchloridite der allgemeinen Formel (I) eingesetzten Edukten und Katalysatoren und den gebildeten Reaktionsprodukten verschieden sind.

Das Produkt der 6-Chlorodibenzo[d,f][1,3,2]dioxaphosphepinsynthese löst sich klar in Toluol (bei 40 °C als 90%ige Lösung und bei 20 °C als 50%ige Lösung) und kann ohne aufwendige Aufarbeitung zur Herstellung von organischen Diphosphiten eingesetzt werden. Zur Vermeidung von Missverständnissen ist darauf hinzuweisen, dass die Herstellung einer toluolischen Lösung von (I) allein der Bereitstellung von (I) für nachfolgende Umsetzungen dient und keinen Aufarbeitungs- oder Reinigungsschritt darstellt.

Das erfindungsgemäße Verfahren hat folgende Vorteile:
- Es wird die Herstellung von 6-Chlorodibenzo[d,f][1,3,2]dioxaphosphepin (1), in hohen Ausbeuten und guten Selektivitäten ermöglicht.
- Das Chlorodibenzo[d,f][1,3,2]dioxaphosphepin wird in hoher Reinheit erhalten.
- Das Verfahren benötigt im Vergleich zu den aus dem Stand der Technik bekannten Verfahren den geringsten Überschuss an PCl₃ für die Synthese der Phosphorchloridite. Aufgrund der Toxizität und der Korrosivität von PCl₃ ist dies besonders vorteilhaft, da die zu handhabenden PCl₃-Ströme bei Synthese, Recycling und Entsorgung gering gehalten werden können.
- Da keine flüchtigen organischen Lösemittel eingesetzt werden, entfällt das Problem der Verbrennung der Dämpfe dieser Lösemittel vor der Abtrennung des bei der Kondensationsreaktion gebildeten HCl durch Wäsche mit einer Base.
- Die als Katalysator eingesetzten Säuresalze von Stickstoffbasen, speziell N-Methylimidazoliumhydrochlorid, eignen sich zur Umsetzung von PCl₃ mit aromatischen Diolen, die einen gewissen Restwassergehalt (bis ca. 0,3 Gew.-%, bezogen auf die Gesamtmenge des eingesetzten Diols) aufweisen. Somit entsteht ein geringerer Aufwand für die Trocknung des Diols und seine Lagerung und seinen Einsatz unter wasserfreien Bedingungen.
- Überraschenderweise wird bei der Herstellung der Phosphorchloridite (I) durch eine Zudosierung des PCl₃ zu vorgelegtem Diol (A1) im Reaktionsprodukt sowohl das Zwischenprodukt (A3) als auch das unerwünschte Nebenprodukt (A4) im Endprodukt lediglich in Spuren < 2 % gefunden.

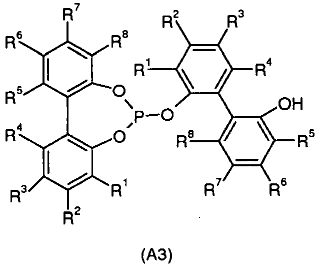

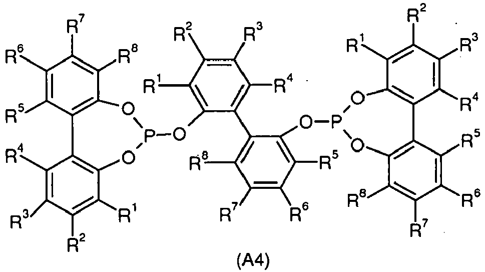

Erfindungsgemäß erfolgt die Umsetzung des Diols (A1) mit PCl₃ in Gegenwart einer katalytischen Menge eines Säuresalzes einer Stickstoffbase.

Das Säuresalzes leitet sich von einer Stickstoffbase ab, die ausgewählt ist unter jeweils unsubstituierten oder substituierten Imidazolen, Pyridinen, 1 H-Pyrazolen, 1-Pyrazolinen, 3-Pyrazolinen, Imidazolinen, Thiazolen, Oxazolen, 1,2,4-Triazolen oder 1,2,3-Triazolen.

Besonders bevorzugt leitet sich das Säuresalz von einer Stickstoffbase ab, die ausgewählt ist unter jeweils unsubstituierten oder substituierten Imidazolen oder Pyridinen.

Besonders bevorzugt sind als Stickstoffbasen 3-Chlorpyridin, 4-Dimethylaminopyridin, 2-Methylpyridin (α-Picolin), 3-Methylpyridin (β-Picolin), 4-Methylpyridin (γ-Picolin), 2-Ethylpyridin, 2-Ethyl-6-methylpyridin, Chinolin, Isochinolin, 1-Methylimidazol, 1,2-Dimethylimidazol, 1-(n-Butyl)imidazol, 1,4,5-Trimethylimidazol, 1,4-Dimethylimidazol, Imidazol, 2-Methylimidazol, 1-Butyl-2-methylimidazol, 4-Methylimidazol, 1-(n- Pentyl)imidazol, 1-(n-Hexyl)imidazol, 1-(n-Octyl)imidazol, 1-(2'-Aminoethyl)-imidazol, 2-Ethyl-4-methylimidazol, 2-Ethylimidazol, 1-(2'-Cyanoethyl)-imidazol und Benzotriazol.

Insbesondere leitet sich das Säuresalz von einer Stickstoffbase ab, die ausgewählt ist unter 1-(C₁-C₄-Alkyl)imidazolen, 2-(C₁-C₄-Alkyl)pyridinen, 3-(C₁-C₄-Alkyl)pyridinen oder 4-(C₁-C₄-Alkyl)pyridinen.

Speziell leitet sich das Säuresalz von einer Stickstoffbase ab, die ausgewählt ist unter 1-Methylimidazol, 1-(n-Butyl)imidazol, 2-Methylpyridin und 2-Ethylpyridin.

Säuren, mit denen die Stickstoffbasen Salze bilden können, sind beispielsweise Chlorwasserstoff (HCl), Bromwasserstoff (HBr), Schwefelsäure (H₂SO₄, unter Bildung von Sulfaten oder Hydrogensulfaten), Methylschwefelsäure (HO(SO₂)OCH₃), Ethylschwefelsäure (HO(SO₂)OC₂H₅), Phosphorsäure (H₃PO₄, unter Bildung von Phosphaten, Hydrogenphosphaten oder Dihydrogenphosphaten), p-Toluolsulfonsäure, Benzolsulfonsäure, Benzoesäure, 2,4,6-Trimethylbenzoesäure, Mandelsäure, Methansulfonsäure, Ethansulfonsäure oder Trifluormethansulfonsäure. Bevorzugte Säuren, mit denen die Stickstoffbasen Salze bilden können, sind beispielsweise Chlorwasserstoff, p-Toluolsulfonsäure, Methansulfonsäure, 2,4,6-Trimethylbenzoesäure und Trifluormethansulfonsäure. Insbesondere bevorzugt ist Chlorwasserstoff.

Speziell wird in dem erfindungsgemäßen Verfahren als Säuresalz einer Stickstoffbase N-Methylimidazoliumhydrochlorid eingesetzt.

Vorzugsweise beträgt die eingesetzte Menge an Säuresalz der Stickstoffbase 0,01 bis 5 Mol%, besonders bevorzugt 0,05 bis 2 Mol%, insbesondere 0,1 bis 1 Mol%, bezogen auf die Molmenge an Diol (A1).

Nach dem erfindungsgemäßen Verfahren erfolgt die Umsetzung des Diols (A1) mit PCl₃ ohne Zugabe von freien Stickstoffbasen. Die Herstellung der Phosphorchloridite der allgemeinen Formel (I) erfolgt somit nach dem erfindungsgemäßen Verfahren, nicht wie in der WO 03/062171 und der WO 03/062251 beschrieben. D. h. nach dem erfindungsgemäßen Verfahren erfolgt die Abtrennung des bei der Umsetzung frei werdenden Chlorwasserstoffs nicht mittels einer Hilfsbase, welche mit Chlorwasserstoff ein Salz bildet, das bei Temperaturen flüssig ist, bei denen die Phosphorchloridite der allgemeinen Formel (I) nicht signifikant zersetzt werden und das mit den Phosphorchloriditen der allgemeinen Formel (I) oder einer Lösung davon in einem geeigneten Lösungsmittel zwei nicht mischbare flüssige Phasen ausbildet.

Das Molverhältnis des sukzessive zugesetzten PCl₃ zur eingesetzten Menge Diol (A1) beträgt am Ende der Umsetzung mehr als 1 : 1, bevorzugt wenigstens 1,1 : 1, insbesondere wenigstens 1,2 : 1.

Das Molverhältnis des sukzessive zugesetzten PCl₃ zur eingesetzten Menge Diol (A1) beträgt am Ende der Umsetzung vorzugsweise höchstens 2,5 : 1, besonders bevorzugt höchstens 2 : 1, insbesondere höchstens 1,8 : 1, speziell höchstens 1,6 : 1, spezieller höchstens 1,4 : 1.

Wie zuvor erwähnt, ermöglicht das erfindungsgemäße Verfahren die Herstellung von 6-Chlorodibenzo[d,f][1,3,2]dioxaphosphepin (I) mit nur geringem Überschuss an PCl₃.

Die Umsetzung erfolgt vorzugsweise bei einer Temperatur in einem Bereich von 20 bis 250 °C, besonders bevorzugt 50 bis 200 °C.

In einer speziellen Ausführungsform des erfindungsgemäßen Verfahrens zur Herstellung der Phosphorchloridite der allgemeinen Formel (I) wird das Diol (A1) zur Umsetzung als Schmelze eingesetzt.

Zur Bereitstellung einer Schmelze wird das Diol (A1) auf eine Temperatur oberhalb des Schmelzpunkts erwärmt, wobei es in einen flüssigen Zustand übergeht. Sofern das Diol (A1) in technischer Qualität mit schmelzpunkterniedrigenden Verunreinigungen eingesetzt wird, kann der Schmelzpunkt auch unterhalb dessen der reinen Verbindung liegen. Reines 2,2'-Dihydroxybiphenyl schmilzt bei 108 bis 110 °C.

In einer speziellen Ausführungsform des erfindungsgemäßen Verfahrens gibt man das PCl₃ zu einer Schmelze des Diols (A1) zu.

Bevorzugt erfolgt die Zugabe des PCl₃ in den Raum über der Schmelze des Diols (A1). Dazu kann eine übliche Zugabevorrichtung eingesetzt werden, deren Auslauföffnung oberhalb der Schmelze endet. Die Zugabe kann in Form einzelner Tropfen oder strahlförmig erfolgen. Die Zulaufmenge kann durch eine übliche Dosiervorrichtung, z. B. ein Ventil, Dosierpumpe, etc., geregelt werden. Somit kann die Reaktion dosierungskontrolliert durchgeführt werden. Zumindest die mit dem PCl₃ in Kontakt kommenden Oberflächen werden aus einem korrosionsbeständigen Material, wie Glas, Teflon, Emaille, etc., ausgeführt.

Der Siedepunkt von PCl₃ (76,1 °C bei 1013 mbar) liegt unterhalb des Schmelzpunkts des Diols (A1) (108 bis 110 °C). Vorzugsweise erfolgt daher die Umsetzung mit einer der folgenden Maßnahmen:
- Zugabe des PCl₃ in ausreichend kleinen Mengen pro Zeitintervall,
- Einsatz einer Kühlvorrichtung, z. B. eines Rückflusskühlers, um verdampfte Anteile PCl₃ als Kondensat abzutrennen und in die Reaktionszone zurückzuführen.

Im Allgemeinen erfolgt die Umsetzung bei Umgebungsdruck (1013 mbar), es können jedoch auch höhere oder niedrigere Drücke eingesetzt werden.

In einer speziellen Ausführung erfolgt die Umsetzung in Gegenwart eines unter den Reaktionsbedingungen inerten Gases. Als solche inerten Gase sind z. B. Stickstoff, Argon oder Helium geeignet. In einer geeigneten Ausführung wird das flüssige Reaktionsmedium mit dem inerten Gas überdeckt. In einer weiteren geeigneten Ausführung wird ein Inertgasstrom durch das flüssige Reaktionsmedium geführt. Der durch das flüssige Reaktionsmedium geführte Inertgasstrom kann dabei gleichzeitig zum Strippen des Reaktionsmediums dienen, um das gebildete HCl effektiver zu entfernen. Aus der Reaktionszone wird in einer bevorzugten Ausführung ein Abgasstrom entnommen, der einer Wäsche zur Entfernung des darin enthaltenen HCl unterzogen wird. Geeignete Waschmedium sind Wasser und wässrige alkalische Waschmedien.

Sofern die Reaktionszone mit einer Kühlvorrichtung, z. B. einem Rückflusskühler, verbunden ist, um PCl₃-Verluste durch Verdampfen zu vermeiden, wird auch der Abgasstrom, gegebenenfalls zusammen mit wenigstens einem inerten Gas, vorzugsweise zuerst durch die Kühlvorrichtung und erst dann den Abgaswäscher geführt.

Die Umsetzung wird vorzugsweise so lange durchgeführt, bis wenigstens 95 Gew.-% des Diols (A1), besonders bevorzugt wenigstens 98 Gew.-% des Diols (A1), zu dem 6-Chlorodibenzo[d,f][1,3,2]dioxaphosphepin (I) umgesetzt sind.

Sofern das Reaktionsgemisch nach Beendigung der Umsetzung noch nicht umgesetztes PCl₃ enthält, kann dieses nach üblichen Verfahren, vorzugsweise destillativ, abgetrennt werden. Zur destillätiven Abtrennung des PCl₃ kann wenigstens eine der folgenden Maßnahmen ergriffen werden:
- Erhöhung der Temperatur des Reaktionsgemischs,
- Anlegen eines verringerten Drucks,
- Einleiten eines Inertgasstroms in das Reaktionsgemisch,
- eine Kombination von wenigstens zwei dieser Maßnahmen.

Die nach dem erfindungsgemäßen Verfahren erhaltenen Phosphorchloridite eignen sich besonders vorteilhaft zur Herstellung organischer Diphosphite.

Ein weiterer Gegenstand der Erfindung ist ein Verfahren zur Herstellung von organischen Diphosphiten der allgemeinen Formel (II) 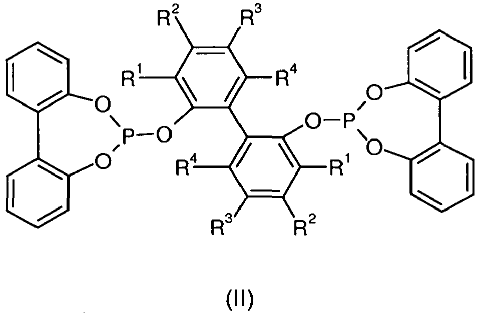 worin
R¹, R², R³ und R⁴ unabhängig voneinander für Wasserstoff, C₁-C₁₂-Alkyl, C₁-C₁₂-Alkoxy, C₃-C₁₂-Cycloalkyl, C₃-C₁₂-Heterocycloalkyl, C₆-C₂₀-Aryl, Chlor, Brom, Hydroxy, Acyl oder Alkoxycarbonyl stehen,
wobei zwei benachbarte Reste R¹ bis R⁴ gemeinsam mit den Kohlenstoffatomen des Benzolkerns, an die sie gebunden sind, auch für ein kondensiertes Ringsystem mit einem weiteren Benzolring stehen können,
wobei C₁-C₁₂-Alkyl und C₁-C₁₂-Alkoxy jeweils unsubstituiert oder durch einen oder mehrere gleiche oder verschiedene Reste R^{a} substituiert sein können, die ausgewählt sind unter C₃-C₁₂-Cycloalkyl, C₃-C₁₂-Heterocycloalkyl, C₆-C₂₀-Aryl, Fluor, Chlor, Cyano, Acyl oder Alkoxycarbonyl,
wobei C₃-C₁₂-Cycloalky und C₃-C₁₂-Heterocycloalkyl jeweils unsubstituiert oder durch einen oder mehrere gleiche oder verschiedene Reste R^{b} substituiert sein können, die ausgewählt sind unter C₁-C₁₂-Alkyl, C₁-C₁₂-Alkoxy, C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl,
wobei C₆-C₂₀-Aryl jeweils unsubstituiert oder durch einen oder mehrere gleiche oder verschiedene Reste R^{c} substituiert sein kann, die ausgewählt sind unter C₁-C₁₂-Alkyl, C₁-C₁₂-Alkoxy, C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl,
bei dem man
a) 2,2'-Dihydroxybiphenyl (A1) 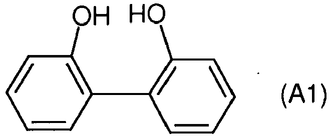 mit PCl₃ in Gegenwart einer katalytischen Menge eines Säuresalzes einer Stickstoffbase und in Abwesenheit externer organischer Lösungsmittel unter Erhalt des 6-Chlorodibenzo[d,f][1,3,2]dioxaphosphepins (I) umsetzt,
b) das 6-Chlorodibenzo[d,f][1,3,2]dioxaphosphepin (I) mit einem Diol der allgemeinen Formel (A2) 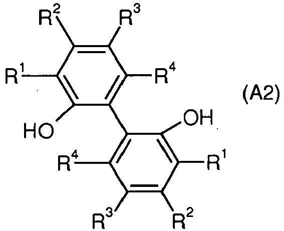 unter Erhalt des organischen Diphosphits (II) umsetzt.

Im Rahmen der Erfindung steht Halogen für Fluor, Chlor, Brom oder lod bevorzugt für Fluor, Chlor oder Brom.

Im Folgenden umfasst der Ausdruck "C₁-C₁₂-Alkyl" geradkettige und verzweigte C₁-C₁₂-Alkylgruppen. Vorzugsweise handelt es sich dabei um geradkettige oder verzweigte C₁-C₈-Alkyl- und ganz besonders bevorzugt C₁-C₆-Alkylgruppen. Beispiele für C₁-C₁₂-Alkylgruppen sind insbesondere Methyl, Ethyl, Propyl, Isopropyl, n-Butyl, Isobutyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl.

Die obigen Erläuterungen zum Ausdruck "C₁-C₁₂-Alkyl" gelten auch für die Alkylgruppen in C₁-C₁₂-Alkoxy.

Substituierte C₁-C₁₂-Alkylgruppen und substituierte C₁-C₁₂-Alkoxygruppen können in Abhängigkeit von ihrer Kettenlänge einen oder mehrere (z. B. 1, 2, 3, 4 oder 5) Substituenten R^{a} aufweisen. Die Substituenten R^{a} sind vorzugsweise unabhängig voneinander ausgewählt unter C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl.

Der Ausdruck "Alkylen" im Sinne der vorliegenden Erfindung steht für geradkettige oder verzweigte Alkandiyl-Gruppen mit vorzugsweise 1 bis 6 Kohlenstoffatomen. Dazu zählen Methylen (-CH₂-), Ethylen (-CH₂-CH₂-), n-Propylen (-CH₂-CH₂-CH₂-), Isopropylen (-CH₂-CH(CH₃)-), etc.

Der Ausdruck "C₃-C₁₂-Cycloalkyl" umfasst im Sinne der vorliegenden Erfindung mono-, bi- oder tricyclische Kohlenwasserstoffreste mit 3 bis 12, insbesondere 5 bis 12, Kohlenstoffatomen. Dazu zählen Cyclopropyl, Cyclobutyl, Cyclopentyl, Cyclohexyl, Cyclo-heptyl, Cyclooctyl, Cyclododecyl, Cyclopentadecyl, Norbornyl, Bicyclo[2.2.2]octyl oder Adamantyl.

Der Ausdruck "C₃-C₁₂-Heterocycloalkyl" umfasst im Sinne der vorliegenden Erfindung nichtaromatische, gesättigte, oder teilweise ungesättigte cycloaliphatische Gruppen mit 3 bis 12, insbesondere 5 bis 12, Kohlenstoffatomen. C₃-C₁₂-Heterocycloalkylgruppen weisen vorzugsweise 4 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder Heteroatom-haltige Gruppen ersetzt. Die Heteroatome oder Heteroatom-haltigen Gruppen sind vorzugsweise ausgewählt unter -O-, -S-, -C(=O)-, oder -S(=O)₂-. Beispiele für C₃-C₁₂-Heterocycloalkyl-gruppen sind Tetrahydrothiophenyl, Tetrahydrofuranyl, Tetrahydropyranyl und Dioxanyl.

Substituierte C₃-C₁₂-Cycloalkylgruppen und substituierte C₃-C₁₂-Heterocycloalkyl-gruppen können in Abhängigkeit von ihrer Ringgröße einen oder mehrere (z. B. 1, 2, 3, 4 oder 5) Substituenten R^{b} aufweisen. Die Substituenten R^{b} sind vorzugsweise unabhängig voneinander ausgewählt unter C₁-C₁₂-Alkyl, C₁-C₁₂-Alkoxy, C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl. Substituierte C₃-C₁₂-Cycloalkylgruppen tragen vorzugsweise eine oder mehrere, z. B. 1, 2, 3, 4 oder 5, C₁-C₆-Alkylgruppen. Substituierte C₃-C₁₂-Heterocyclo-alkylgruppen tragen vorzugsweise eine oder mehrere, z. B. 1, 2, 3, 4 oder 5, C₁-C₆-Alkylgruppen.

Beispiele für substituierte C₃-C₁₂-Cycloalkylgruppen sind z. B. 2- und 3-Methylcyclopentyl, 2- und 3-Ethylcyclopentyl, 2-, 3- und 4-Methylcyclohexyl, 2-, 3- und 4-Ethylcyclohexyl, 2-, 3- und 4-Propylcyclohexyl, 2-, 3- und 4-Isopropylcyclohexyl, 2-, 3- und 4-Butylcyclohexyl, 2-, 3- und 4-sec.-Butylcyclohexyl, 2-, 3- und 4-tert-Butylcyclohexyl, 2-, 3- und 4-Methylcycloheptyl, 2-, 3- und 4-Ethylcycloheptyl, 2-, 3- und 4-Propylcycloheptyl, 2-, 3- und 4-Isopropylcycloheptyl, 2-, 3- und 4-Butylcycloheptyl, 2-, 3- und 4-sec-Butylcycloheptyl, 2-, 3- und 4-tert-Butylcycloheptyl, 2-, 3-, 4- und 5-Methylcyclooctyl, 2-, 3-, 4- und 5-Ethylcyclooctyl, 2-, 3-, 4- und 5-Propylcyclooctyl.

Der Ausdruck "C₆-C₂₀-Aryl" umfasst im Sinne der vorliegenden Erfindung mono- oder polycyclische aromatische Kohlenwasserstoffreste. Diese weisen 6 bis 20 Ringatome, insbesondere 6 bis 14 Ringatome, auf. Aryl steht vorzugsweise für Phenyl, Naphthyl, Indenyl, Fluorenyl, Anthracenyl, Phenanthrenyl, Naphthacenyl, Chrysenyl, Pyrenyl, Coronenyl, Perylenyl, etc. Insbesondere steht Aryl für Phenyl oder Naphthyl.

Substituierte C₆-C₂₀-Arylgruppen können in Abhängigkeit von ihrer Ringgröße einen oder mehrere (z. B. 1, 2, 3, 4 oder 5) Substituenten R^{c} aufweisen. Die Substituenten R^{c} sind vorzugsweise unabhängig voneinander ausgewählt unter C₁-C₁₂-Alkyl, C₁-C₁₂-Alkoxy, C₃-C₁₂-Cycloalkyl, C₃-C₁₂-Heterocycloalkyl, C₆-C₂₀-Aryl, Fluor, Chlor, Brom, Cyano, Nitro, Formyl, Acyl oder Alkoxycarbonyl.

Substituiertes C₆-C₂₀-Aryl ist vorzugsweise substituiertes Phenyl oder substituiertes Naphthyl. Substituierte C₆-C₂₀-Arylgruppen tragen vorzugsweise eine oder mehrere, z. B. 1, 2, 3, 4 oder 5 Substituenten, ausgewählt unter C₁-C₆-Alkylgruppen, C₁-C₆-Alkoxygruppen, Chlor oder Brom.

Im Rahmen der vorliegenden Erfindung bezeichnet "Acyl" Alkanoyl- oder Aroylgruppen, die im Allgemeinen 2 bis 11, bevorzugt 2 bis 8 Kohlenstoffatome aufweisen. Dazu zählen z. B. Acetyl, Propanoyl, Butanoyl, Pentanoyl, Hexanoyl, Heptanoyl-, 2-Ethylhexanoyl, 2-Propylheptanoyl, Pivaloyl, Benzoyl oder Naphthoyl.

Carboxylat steht im Rahmen dieser Erfindung vorzugsweise für ein Derivat einer Carbonsäurefunktion, insbesondere für eine Carbonsäureesterfunktion oder eine Carbonsäureamidfunktion. Dazu zählen z. B. die Ester mit C₁-C₄-Alkanolen, wie Methanol, Ethanol, n-Propanol, Isopropanol, n-Butanol, sec.-Butanol und tert.-Butanol. Dazu zählen weiterhin die primären Amide und deren N-Alkyl- und N,N-Dialkylderivate. Kondensierte Ringsysteme können durch Anellierung verknüpfte (ankondensierte) aromatische, hydroaromatische und cyclische Verbindungen sein. Kondensierte Ringsysteme bestehen aus zwei, drei oder mehr als drei Ringen. Je nach der Verknüpfungsart unterscheidet man bei kondensierten Ringsystemen zwischen einer ortho-Anellierung, d. h. jeder Ring hat mit jedem Nachbarring jeweils eine Kante bzw. zwei Atome gemeinsam, und einer peri-Anellierung, bei der ein Kohlenstoffatom mehr als zwei Ringen angehört. Bevorzugt unter den kondensierten Ringsystemen sind ortho-kondensierte Ringsysteme.

Bezüglich Schritt a) auf die vorherigen Angaben zur Herstellung von Phosphorchloriditen der allgemeinen Formel (I) in vollem Umfang Bezug genommen.

### Schritt b)

Bevorzugt stehen in den organischen Diphosphiten der allgemeinen Formel (II) die Reste R³ und R⁴ gemeinsam für einen anellierten Benzolring und R¹ und R² stehen für Wasserstoff. D. h. die Gruppe der Formel 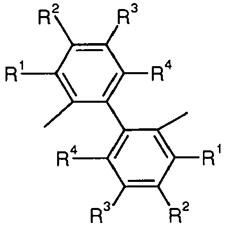 steht für

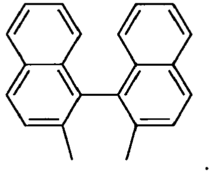

Bevorzugt sind die Diole der allgemeinen Formel (A2) 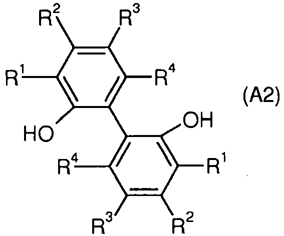 ausgewählt unter 3,3',5,5'-Tetramethyl-1,1'-biphenyl-2,2'-diol, 3,3',5,5'-Tetraethyl-1,1'-biphenyl-2,2'-diol, 3,3',5,5'-Tetra-n-propyl-1,1'-biphenyl-2,2'-diol, 3,3'-Dimethyl-5,5'-dichlor-1,1'-biphenyl-2,2'-diol, 3,3'-Diethyl-5,5'-dibrom-1,1'-biphenyl-2,2'-diol, 3,3'-Dimethyl-5,5'-diethyl-1,1'-biphenyl-2,2'-diol, 3,3'-Dimethyl-5,5'-di-n-propyl-1,1'-biphenyl-2,2'-diol, 3,3',5,5'-Tetra-isopropyl-1,1'-biphenyl-2,2'-diol, 3,3',5,5'-Tetra-n-butyl-1,1'-biphenyl-2,2'-diol, 3,3',5,5'-Tetra-isobutyl-1,1'-biphenyl-2,2'-diol, 3,3',5,5'-Tetra-sec-butyl-1,1'-biphenyl-2,2'-diol, 3,3',5,5'-Tetra-(1,1-dimethylethyl)-1,1'-biphenyl-2,2'-diol, 3,3'-Di-(1,1-dimethylethyl)-5,5'-di-n-amyl-1,1'-biphenyl-2,2'-diol, 3,3',5,5'-Tetrakis-(1,1-dimethylpropyl)-1,1'-biphenyl-2,2'-diol, 3,3'-Di-(1,1-dimethylethyl)-5,5'-bis-(1,1-dimethylpropyl)-1,1'-biphenyl-2,2'-diol, 3,3'-Di-(1,1-dimethylethyl)-5,5'-di-n-hexyl-1,1'-biphenyl-2,2'-diol, 3,3'-Di-(1,1-dimethylethyl)-5,5'-di-2-hexyl-1,1'-biphenyl-2,2'-diol, 3,3'-Di-(1,1-dimethylethyl)-5,5'-di-3-hexyl-1,1'-biphenyl-2,2'-diol, 3,3'-Di-(1,1-dimethylethyl)-5,5'-di-n-heptyl-1,1'-biphenyl-2,2'-diol, 3,3'-Di-(1,1-dimethylethyl)-5,5'-di-2-heptyl-1,1'-biphenyl-2,2'-diol, 3,3'-Di-(1,1-dimethylethyl)-5,5'-di-3-heptyl-1,1'-biphenyl-2,2'-diol, 3,3'-Di-(1,1-dimethylethyl)-5,5'-di-4-heptyl-1,1'-biphenyl-2,2'-diol, 3,3'-Di-(1,1-dimethylethyl)-5,5'-di-n-octyl-1,1'-biphenyl-2,2'-diol, 3,3'-Di-(1,1-dimethylethyl)-5,5'-di-2-octyl-1,1'-biphenyl-2,2'-diol, 5,5'-Di-3-octyl-1,1'-biphenyl-2,2'-diol, 3,3'-Di-(1,1-dimethylethyl)-5,5'-di-4-octyl-1,1'-biphenyl-2,2'-diol, 3,3'-Di-(1,1-dimethylethyl)-5,5'-bis(1,1,3,3-tetramethylbutyl)-1,1'-biphenyl-2,2'-diol, 3,3',5,5'-Tetrakis(1,1,3,3-tetra-methylbutyl)-1,1'-biphenyl-2,2'-diol, 3,3'-di-(1,1-dimethylethyl)-5,5',6,6'-Tetramethyl-1,1'-biphenyl-2,2'-diol, 3,3'-Di-(1,1-dimethylethyl)-5,5'-diphenyl-1,1'-biphenyl-2,2'-diol, 3,3'-Di-(1,1-dimethylethyl)-5,5'-bis(2,4,6,-trimethylphenyl)-1,1'-biphenyl-2,2'-diol, 3,3'-Di-(1,1-dimethylethyl)-5,5'-dimethoxy-1,1'-biphenyl-2,2'-diol, 3,3'-Di-(1,1-dimethyl-ethyl)-5,5'-diethoxy-1,1'-biphenyl-2,2'-diol, 3,3'-Di-(1,1-dimethylethyl)-5,5'-di-n-propoxy-1,1'-biphenyl-2,2'-diol, 3,3'-Di-(1,1-dimethylethyl)-5,5'-di-isopropoxy-1,1'-biphenyl-2,2'-diol, 3,3'-Di-(1,1-dimethylethyl)-5,5'-di-n-butoxy-1,1'-biphenyl-2,2'-diol, 3,3'-Di-(1,1-dimethylethyl)-5,5'-di-sec-butoxy-1,1'-biphenyl-2,2'-diol, 3,3'-Di-(1,1-dimethylethyl)-5,5'-di-iso-butoxy-1,1'-biphenyl-2,2'-diol, 3,3'-Di-(1,1-dimethylethyl)-5,5'-di-tert-butoxy-1,1'-biphenyl-2,2'-diol und 1,1'-Binaphthalinyl-2,2'-diol.

Besonders bevorzugt steht das Diol (A2) für 3,3',5,5'-Tetra-(1,1-dimethylethyl)-1,1'-biphenyl-2,2'-diol. D. h. besonders bevorzugt stehen in den organischen Diphosphiten der allgemeinen Formel (II) die Reste R¹ und R³ alle für tert.-Butyl und R² und R⁴ alle für Wasserstoff.

Besonders bevorzugt eignet sich das nach dem erfindungsgemäßen Verfahren hergestellte 6-Chlorodibenzo[d,f][1,3,2]dioxaphosphepin (I) zur Herstellung der folgenden organischen Diphosphite (II):

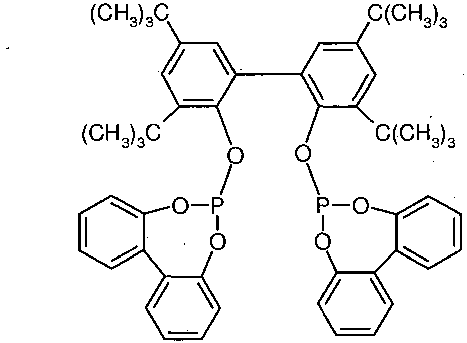

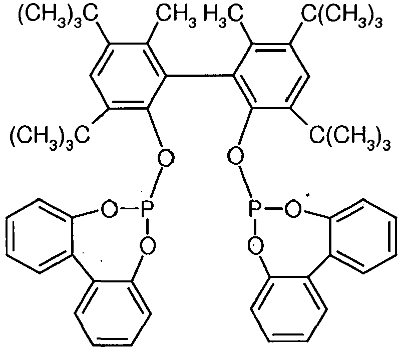

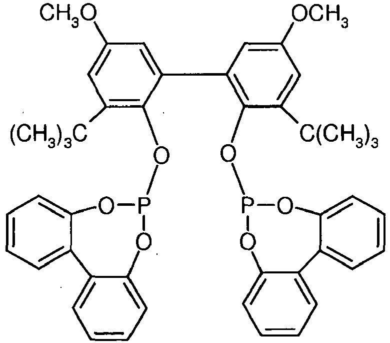

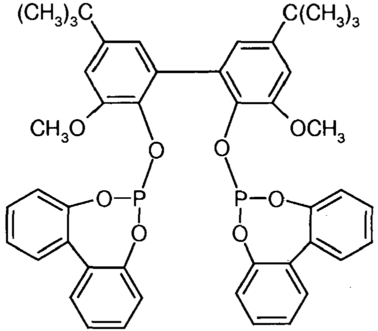

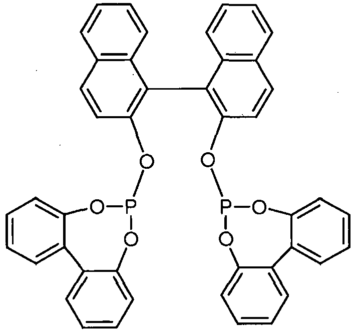

Insbesondere handelt es sich bei dem organischen Diphosphit der Formel (II) um 6,6'-[[3,3',5,5'-Tetrakis(1,1-dimethylethyl)-1,1'-biphenyl]-2,2'-diyl]bis(oxy)]bis-dibenzo [d,f] [1,3,2]-dioxaphosphepin.

Schritt b) der Herstellung der Diphosphite (II) kann prinzipiell durch eine bekannte Phosphorhalogenid-Alkohol-Kondensationsreaktionen erfolgen, wie sie z. B. in EP 0 214 622 A2, US 4,668,651, US 4,748,261, US 4,769,498, US 4,885,401, US 5,235,113, US 5,391,801, US 5,663,403, US 5,728,861, US 6,172,267, WO 2003/062171 und WO 2003/062251 beschrieben ist.

Bevorzugt erfolgt die Umsetzung in Schritt b) in Gegenwart einer Base.

Geeignete Basen sind allgemein z. B. Alkalimetallhydroxide, Erdalkalimetallhydroxide, NH₃, Alkalimetallcarbonate, Erdalkalimetallcarbonate, Alkalimetallhydrogencarbonate, Erdalkalimetallhydrogencarbonate, tertiäre Amine und basische lonenaustauscherharze, etc. Dazu zählen z. B. NaOH, KOH, Ca(OH)₂, Triethylamin, Tripropylamin, Tributylamin, etc. Bevorzugt sind tertiäre Amine und speziell Triethylamin.

In einer speziellen Ausführung erfolgt die Umsetzung in Schritt b) durch ein Verfahren, wie es in WO 2003/062171 und WO 2003/062251 beschrieben ist. Dabei erfolgt dann der Schritt b) Gegenwart einer Base, die ausgewählt ist unter Basen, die mit der in dem jeweiligen Reaktionsschritt gebildeten Halogenwasserstoffsäure ein Salz bilden, das bei Temperaturen flüssig ist, bei denen das Reaktionsprodukt des jeweiligen Reaktionsschritts während der Abtrennung des flüssigen Salzes nicht signifikant zersetzt wird und das Salz mit dem Reaktionsmedium des jeweiligen Reaktionsschritts zwei nicht mischbare flüssige Phasen ausbildet.

Geeignete Basen dieses Typs sind in der WO 2003/062171 und WO 2003/062251 beschrieben, worauf hier in vollem Umfang Bezug genommen wird. Bevorzugt wird in Schritt b) eine Base eingesetzt, die ausgewählt ist unter 1-Methylimidazol, 1-n-Butylimidazol, 2-Methylpyridin und 2-Ethylpyridin.

Vorteilhafterweise lässt sich nach der zuletzt genannten Verfahrensvariante die Hauptmenge der bei der Kondensationsreaktion in Schritt b) aus HCl und Base gebildeten Säuresalze durch einfache Phasentrennung entfernen.

Die organischen Diphosphite (II) eignen sich vorteilhaft als Liganden für Katalysatoren für die Hydroformylierung, die Hydrocyanierung oder die Hydrierung.

Die Erfindung wird anhand des folgenden, nicht einschränkenden Beispiels näher erläutert.

### Beispiele

### Beispiel 1:

### Synthese von 6-Chlorodibenzo[d,f][1,3,2]dioxaphosphepin mit MethylimidazoliumHydrochlorid als Katalysator

In einem 2000 ml Doppelmantelreaktor wurden unter Stickstoff 2,2'-Dihydroxybiphenyl (931,1 g, 5,0 mol) und 1-Methylimidazoliumhydrochlorid (0,9 g, 7,6 mmol) vorgelegt und nach Aufschmelzen des 2,2'-Dihydroxybiphenyls auf eine Innentemperatur von 142 °C erwärmt. Dann wurde unter Rühren der Zulauf des PCl₃ (861,2 g, 6,263 mol) gestartet, wobei darauf geachtet wurde, dass das PCl₃ nicht an die heiße Reaktorwand gelangt. Die Dosierrate wurde so geregelt, dass der angeschlossen HCl-Waschturm das gebildete HCl vollständig absorbieren konnte. Für die Zugabe des PCl₃ wurden insgesamt drei Stunden benötigt. Im Anschluss an die Zugabe des PCl₃ wurde für drei Stunden bei 140 °C nachgerührt und dabei ein dünnflüssiges gelbes Reaktionsgemisch erhalten. Anschließend wurde zur Entfernung des überschüssigen PCl₃ innerhalb von 40 Minuten der Reaktor auf ein Endvakuum von 16 mbar evakuiert. Die letzten Reste von PCl₃ wurden durch Rühren im Vakuum bei 140 °C/16 mbar entfernt und das Gemisch anschließend auf 65 °C abgekühlt. Nach Belüften mit Stickstoff wurde Toluol (139,2 g) zugegeben und die so erhaltene 90 gew%-ige Lösung (1390 g) des Produkts in eine Schraubdeckelflasche abgelassen und unter Argon verschlossen. Nach ³¹P-NMR hatte das Produkt eine Reinheit von 98,7 %.

## Patentansprüche

1. Verfahren zur Herstellung von 6-Chlorodibenzo[d,f][1,3,2]dioxaphosphepin (I) 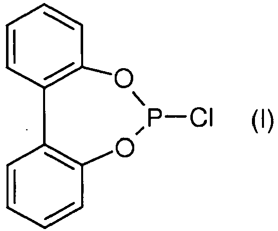 bei dem man 2,2'-Dihydroxybiphenyl (A1) 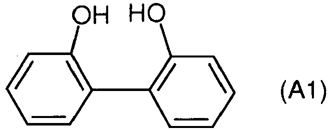 mit PCl₃ in Gegenwart einer katalytischen Menge eines Säuresalzes einer Stickstoffbase umsetzt, wobei sich das Säuresalze von einer Stickstoffbase ableitet, die ausgewählt ist unter jeweils unsubstituierten oder substituierten Imidazolen, Pyridinen, 1 H-Pyrazolen, 4H-Pyrazolen, 1-Pyrazolinen, 3-Pyrazolinen, Imidazolinen, Thiazolen, Oxazolen, 1,2,4-Triazolen und 1,2,3-Triazolen, und wobei die Umsetzung in Abwesenheit externer organischer Lösungsmittel erfolgt.

2. Verfahren nach Anspruch 1, wobei sich das Säuresalz von einer Säure ableitet, die ausgewählt ist unter Chlorwasserstoff, p-Toluolsulfonsäure, Methansulfonsäure, 2,4,6-Trimethylbenzoesäure und Trifluormethansulfonsäure.

3. Verfahren nach einem der vorhergehenden Ansprüche, wobei als Säuresalz einer Stickstoffbase N-Methylimidazoliumhydrochlorid eingesetzt wird.

4. Verfahren nach einem der vorhergehenden Ansprüche, wobei die eingesetzte Menge an Säuresalz der Stickstoffbase 0,01 bis 5 Mol%, besonders bevorzugt 0,05 bis 2 Mol%, insbesondere 0,1 bis 1 Mol%, bezogen auf die Molmenge an Diol (A1), beträgt.

5. Verfahren nach einem der vorhergehenden Ansprüche, wobei die Umsetzung ohne Zugabe von freien Stickstoffbasen erfolgt.

6. Verfahren nach einem der vorhergehenden Ansprüche, wobei das Molverhältnis des sukzessive zugesetzten PCl₃ zur eingesetzten Menge Diol (A1) am Ende der Umsetzung mehr als 1 : 1, bevorzugt wenigstens 1,1 : 1, insbesondere wenigstens 1,2 : 1, beträgt.

7. Verfahren nach einem der vorhergehenden Ansprüche, wobei das Molverhältnis des sukzessive zugesetzten PCl₃ zur eingesetzten Menge Diol (A1) am Ende der Umsetzung höchstens 2,5 : 1, besonders bevorzugt höchstens 2 : 1, insbesondere höchstens 1,8 : 1, speziell höchstens 1,6 : 1, spezieller höchstens 1,4 : 1, beträgt.

8. Verfahren nach einem der vorhergehenden Ansprüche, wobei das Diol (A1) zur Umsetzung als Schmelze eingesetzt wird.

9. Verfahren nach einem der vorhergehenden Ansprüche, bei dem man in einer Reaktionszone eine Schmelze des Diols der allgemeinen Formel (A1) vorlegt und das PCl₃ über den Verlauf der Umsetzung als Zuführstrom in die Reaktionszone einspeist.

10. Verfahren nach einem der Ansprüche 8 oder 9, wobei die Zugabe des PCl₃ in den Raum über der Schmelze des Diols (A1) erfolgt.

## Claims

1. A process for preparing 6-chlorodibenzo-[d,f][1,3,2]dioxaphosphepin (I) 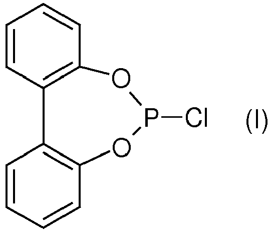 which comprises reacting 2,2'-dihydroxybiphenyl (A1) 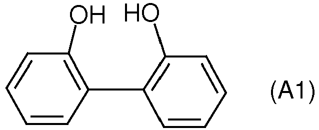 with PCl₃ in the presence of a catalytic amount of an acid salt of a nitrogen base, wherein the acid salt is derived from a nitrogen base selected from among in each case unsubstituted or substituted imidazoles, pyridines, 1H-pyrazoles, 4H-pyrazoles, 1pyrazolines, 3-pyrazolines, imidazolines, thiazoles, oxazoles, 1,2,4-triazoles and 1,2,3triazoles, and wherein the reaction is carried out in the absence of external organic solvents.

2. The process according to claim 1, wherein the acid salt is derived from an acid selected from among hydrogen chloride, p-toluenesulfonic acid, methanesulfonic acid, 2,4,6-trimethylbenzoic acid and trifluoromethanesulfonic acid.

3. The process according to any of the preceding claims, wherein N-methylimidazolium hydrochloride is used as acid salt of a nitrogen base.

4. The process according to any of the preceding claims, wherein the amount of acid salt of the nitrogen base used is from 0.01 to 5 mol%, particularly preferably from 0.05 to 2 mol%, in particular from 0.1 to 1 mol%, based on the molar amount of diol (A1).

5. The process according to any of the preceding claims, wherein the reaction is carried out without addition of free nitrogen bases.

6. The process according to any of the preceding claims, wherein the molar ratio of the gradually added PCl₃ to the amount of diol (A1) used is more than 1:1, preferably at least 1.1:1, in particular at least 1.2:1, at the end of the reaction.

7. The process according to any of the preceding claims, wherein the molar ratio of the gradually added PCl₃ to the amount of diol (A1) used is not more than 2.5:1, particularly preferably not more than 2:1, in particular not more than 1.8:1, especially not more than 1.6:1, more especially not more than 1.4:1, at the end of the reaction.

8. The process according to any of the preceding claims, wherein the diol (A1) is used as a melt for the reaction.

9. The process according to any of the preceding claims, wherein a melt of the diol of the general formula (A1) is placed in a reaction zone and the PCl₃ is fed as feedstream into the reaction zone over the course of the reaction.

10. The process according to either claim 8 or 9, wherein the PCl₃ is introduced into the space above the melt of the diol (A1).

## Revendications

1. Procédé pour la préparation de 6-chlorodibenzo[d,f][1,3,2]dioxaphosphépine (I) 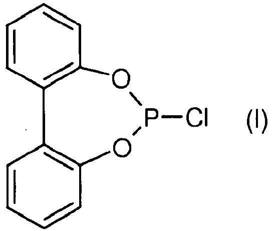 dans lequel on transforme du 2,2'-dihydroxybiphényle (A1) 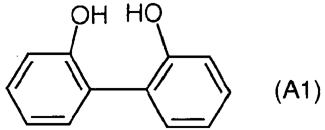 avec du PCl₃ en présence d'une quantité catalytique d'un sel d'acide d'une base azotée, le sel d'acide étant dérivé d'une base azotée qui est choisie parmi les imidazoles, les pyridines, les 1H-pyrazoles, les 4H-pyrazoles, les 1-pyrazolines, les 3-pyrazolines, les imidazolines, les thiazoles, les oxazoles, les 1,2,4-triazoles et les 1,2,3-triazoles substitués ou non substitués et la transformation ayant lieu en l'absence de solvants organiques externes.

2. Procédé selon la revendication 1, le sel d'acide étant dérivé d'un acide qui est choisi parmi l'acide chlorhydrique, l'acide p-toluènesulfonique, l'acide méthanesulfonique, l'acide 2,4,6-triméthylbenzoïque et l'acide trifluorométhanesulfonique.

3. Procédé selon l'une quelconque des revendications précédentes, le chlorure de N-méthylimidazolium étant utilisé comme sel d'acide d'une base azotée.

4. Procédé selon l'une quelconque des revendications précédentes, la quantité utilisée de sel d'acide de la base azotée étant de 0,01 à 5% en mole, de manière particulièrement préférée de 0,05 à 2% en mole, en particulier de 0,1 à 1% en mole, par rapport à la quantité molaire de diol (Al).

5. Procédé selon l'une quelconque des revendications précédentes, la transformation ayant lieu sans addition de bases azotées libres.

6. Procédé selon l'une quelconque des revendications précédentes, le rapport molaire du PCl₃ ajouté successivement à la quantité utilisée de diol (Al) à la fin de la transformation étant supérieur à 1:1, de préférence d'au moins 1,1:1, en particulier d'au moins 1,2:1.

7. Procédé selon l'une quelconque des revendications précédentes, le rapport molaire du PCl₃ ajouté successivement à la quantité utilisée de diol (Al) à la fin de la transformation étant d'au plus 2,5:1, de manière particulièrement préférée d'au plus 2:1, en particulier d'au plus 1,8:1, tout particulièrement d'au plus 1,6:1, encore plus particulièrement d'au plus 1,4:1.

8. Procédé selon l'une quelconque des revendications précédentes, le diol (Al) étant utilisé sous forme de masse fondue pour la transformation.

9. Procédé selon l'une quelconque des revendications précédentes, dans lequel on dispose au préalable, dans une zone de réaction, une masse fondue du diol de formule générale (Al) et on injecte le PCl₃ pendant le déroulement de la transformation sous forme de flux d'alimentation dans la zone de réaction.

10. Procédé selon l'une quelconque des revendications 8 ou 9, l'addition du PCl₃ dans la chambre ayant lieu via la masse fondue du diol (Al).
